# EUROPEAN PATENT APPLICATION

(11) **EP 4 811 637 A1**
(43) Date of publication of application: **23.09.2026**
(21) Application number: 24906573.1
(22) Date of filing: 20.12.2024
(51) Int. Cl.: H02M 3/07, H02M 1/00

(54) **CURRENT CONTROL CIRCUIT, POWER SUPPLY CHIP, AND ELECTRONIC DEVICE**

(30) Priority: 22.12.2023 CN 202311788033
(71) Applicant: Huawei Technologies Co., Ltd., Shenzhen, Guangdong 518129 (CN)
(72) Inventor: ZHOU, Liang, Shenzhen, Guangdong 518129 (CN); ZHOU, Yong, Shenzhen, Guangdong 518129 (CN); CHEN, Peng, Shenzhen, Guangdong 518129 (CN); DUNN, Pak Kong, Shenzhen, Guangdong 518129 (CN)
(74) Representative: Epping - Hermann - Fischer
(86) International application number: PCT/CN2024/141205
(87) International publication number: WO 2025/131102

(57) **Abstract**

Embodiments of this application provide a current control circuit, a power supply chip, and an electronic device, including a charge charging/discharging circuit and a peak current control circuit. The peak current control circuit includes a voltage divider feedback circuit and a compensation circuit, and the voltage divider feedback circuit is configured to generate a feedback control voltage. The charge charging/discharging circuit is coupled to the compensation circuit, and regulates the feedback control voltage through the compensation circuit. When the feedback control voltage decreases, the charge charging/discharging circuit injects charges into the compensation circuit, so that the feedback control voltage increases. When the feedback control voltage increases, the charge charging/discharging circuit draws charges from the compensation circuit, so that the feedback control voltage decreases.

## Description

### TECHNICAL FIELD

This application relates to the field of display technologies, and in particular, to a current control circuit, a power supply chip, and an electronic device.

### BACKGROUND

Switching power supply chips are widely used in automotive electronic systems, and are configured to supply power to electronic components of parts of automobiles.

In automobile applications, amplitude modulation broadcasting, frequency modulation broadcasting, and mobile services occupy most frequency bands of 150 kHz to 108 MHz. To ensure that these frequency bands are not interfered, a switching frequency and electromagnetic interference of an automobile power supply chip are strictly limited. Peak current mode (PCM)-based switching power supply chips are widely used in automotive electronics due to advantages, of the PCM-based switching power supply chips, of a constant switching frequency and easy processing of electromagnetic interference.

In recent years, with continuous development of electrification and intelligence of new energy vehicles, an automobile system like an intelligent cockpit or an advanced driver assistance system has an increasingly high requirement on computational power, and a computational power chip of the automobile system has an increasingly high requirement on a power supply current. However, in actual application, a load current may change severely. The severe load current change may cause much more severe transient responses of an output voltage, such as an overshoot and an undershoot, thereby causing the output voltage to basically deviate from a steady-state value that the output voltage needs to reach. This leads to an extremely unstable factor for a circuit system. Therefore, in the conventional peak current mode (PCM)-based switching power supply chip, how to improve a dynamic response capability of the output voltage when a current of a load changes abruptly has always been a hot research issue for a person skilled in the art.

### SUMMARY

Embodiments of this application provide a current control circuit, a power supply chip, and an electronic device. According to the technical solutions provided in embodiments of this application, when a current of a load changes abruptly and a switching frequency changes, an output voltage can quickly and dynamically respond, and be restored to a steady-state voltage value as soon as possible.

To achieve the foregoing objective, this application uses the following technical solutions.

According to a first aspect, an embodiment of this application provides a current control circuit, including a charge charging/discharging circuit and a peak current control circuit. The peak current control circuit includes a voltage divider feedback circuit and a compensation circuit, and the voltage divider feedback circuit is configured to generate a feedback control voltage. The charge charging/discharging circuit is coupled to the compensation circuit, and regulates the feedback control voltage through the compensation circuit. When the feedback control voltage decreases, the charge charging/discharging circuit charges the compensation circuit, so that the feedback control voltage increases. When the feedback control voltage increases, the compensation circuit is discharged through the charge charging/discharging circuit, so that the feedback control voltage decreases.

The peak current control circuit includes a voltage divider feedback circuit. The voltage divider feedback circuit is formed by coupling several resistors in series (or in parallel). An output voltage of the peak current control circuit acts on an input end of the voltage divider feedback circuit. Therefore, voltages at two ends of the several resistors vary with the output voltage. Similarly, the feedback control voltage at an output end of the voltage divider feedback circuit also varies with the output voltage. When a load current changes greatly, the output voltage of the peak current control circuit generates a transient response, for example, an overshoot occurs, and deviates from a steady-state value that the output voltage should reach. Because the output voltage acts on the input end of the voltage divider feedback circuit, the feedback control voltage of the voltage divider feedback circuit also deviates from the steady-state value. Regulating the feedback control voltage under a joint action of the charge charging/discharging circuit and the compensation circuit, so that the feedback control voltage is restored to the steady-state value as soon as possible. Finally, the feedback control voltage also passes through a series of feedback loop networks and operational amplifiers, and finally reacts to the output voltage, so that the output voltage is restored to a steady state as soon as possible. Because the charge charging/discharging circuit has a function of quickly injecting charges and drawing charges, the feedback control voltage can be quickly regulated, so that the output voltage is quickly restored to the steady-state value.

In a possible design, the charge charging/discharging circuit includes a charge charging branch and a charge discharging branch. The charge charging branch includes a first current mirror, and the charge discharging branch includes a second current mirror. The first current mirror is coupled to the second current mirror, and an intermediate node between the first current mirror and the second current mirror is coupled to the compensation circuit. The compensation circuit is coupled to a port of the feedback control voltage. The charge charging/discharging circuit injects a current into or draws a current from the compensation circuit through the first current mirror and the second current mirror, and then the injected (or drawn) charges are applied to the feedback control voltage through the compensation circuit. In this way, the value is quickly restored to the steady-state value. In a possible design, the charge charging branch further includes a first comparator, a first constant on timer, and a first transistor. A first input end of the first comparator receives a first reference voltage, and a second input end receives a feedback loop voltage. An output end of the first comparator is coupled to an input end of the first constant on timer, and an output end of the first constant on timer is coupled to a control electrode of the first transistor. An output signal of the first constant on timer is used to control on and off of the first transistor.

In a possible design, the charge charging branch further includes a first resistor and a first capacitor. The first current mirror is coupled to a power supply voltage end to receive a power supply voltage signal, and a first output end of the first current mirror is coupled to a first electrode of the first transistor. A second electrode of the first transistor is coupled to a first end of the first resistor, and a second end of the first resistor is coupled to a first end of the first capacitor. A second end of the first capacitor is coupled to a reference ground voltage end.

In a possible design, the charge charging branch further includes a first inverter and a second transistor. The output end of the first constant on timer is coupled to an input end of the first inverter, an output end of the first inverter is coupled to a control electrode of the second transistor, and the output signal of the first constant on timer is further used to control on and off of the second transistor.

In a possible design, a first electrode of the second transistor is coupled to an intermediate node between the first resistor and the first capacitor, and a second electrode of the second transistor is coupled to the reference ground voltage end. Under control of the output signal of the first constant on timer, when the first transistor is on, the second transistor is off, and a power supply voltage of the power supply voltage end charges the first capacitor; or when the first transistor is off, the second transistor is on, and the first capacitor is discharged through the second transistor.

In a possible design, the charge discharging branch includes a second amplifier, a second constant on timer, and a third transistor. A first input end of the second amplifier receives a second reference voltage, and a second input end receives the feedback loop voltage. An output end of the second amplifier is coupled to an input end of the second constant on timer, and an output end of the second constant on timer is coupled to a control electrode of the third transistor. An output signal of the second constant on timer is used to control on and off of the third transistor.

In a possible design, the charge discharging branch further includes a second inverter and a fourth transistor. An input end of the second inverter is coupled to the output end of the second constant on timer, and the input end of the second inverter is coupled to the control electrode of the third transistor. An output end of the second inverter is coupled to a control electrode of the fourth transistor. The output signal of the second constant on timer controls on and off of the fourth transistor through the second inverter.

In a possible design, the charge discharging branch further includes a second resistor and a second capacitor. A first end of the second capacitor is coupled to the power supply voltage end, and a second end of the second capacitor is coupled to a first end of the second resistor. A second end of the second resistor is coupled to a first electrode of the third transistor, a second electrode of the third transistor is coupled to a first end of the second current mirror, and a second end of the second current mirror is coupled to the reference ground voltage end.

In a possible design, the charge discharging branch further includes a fourth transistor. The output end of the second inverter is coupled to the control electrode of the fourth transistor. A first electrode of the fourth transistor is coupled to the power supply voltage end, and a second electrode of the fourth transistor is coupled to an intermediate node between the second resistor and the second capacitor.

In a possible design, under control of the output signal of the second constant on timer, when the third transistor is on, the fourth transistor is off, and the second capacitor is charged by the supply voltage of the supply voltage end. When the third transistor is off, the fourth transistor is on, and the second capacitor is discharged through the fourth transistor.

In a possible design, the compensation circuit includes a first compensation resistor, a first compensation capacitor, and a second compensation capacitor. The first compensation resistor and the first compensation capacitor are coupled in series between the output end of the voltage divider feedback circuit and the reference ground voltage end. The second compensation capacitor is coupled between the output end of the voltage divider feedback circuit and the reference ground voltage end. The second compensation capacitor is connected in parallel to a series branch of the first compensation resistor and the first compensation capacitor.

In a possible design, the peak current control circuit further includes a drive trigger circuit. The drive trigger circuit is configured to generate a drive control signal. An input end of the drive trigger circuit is coupled to the output end of the voltage divider feedback circuit, to receive a feedback control voltage signal.

In a possible design, the peak current control circuit further includes a mode switching circuit. The mode switching circuit is coupled to both an output end of the power supply voltage end and an output end of the drive trigger circuit, and receives the drive control signal of the drive trigger circuit. Under an action of the drive control signal, the mode switching circuit enters different circuit operating states to generate different output voltages.

In a possible design, an output end of the mode switching circuit is separately coupled to a load circuit and the voltage divider feedback circuit, to provide an output voltage signal for the load circuit and the voltage divider feedback circuit.

According to a second aspect of embodiments of this application, a power supply chip is provided. The power supply chip includes a current control circuit and a power supply detection module, and the current control circuit is coupled to the power supply detection module.

According to a third aspect of embodiments of this application, an electronic device is provided. The electronic device includes a power supply chip and a printed circuit board, and the power supply chip is disposed on the printed circuit board.

### BRIEF DESCRIPTION OF DRAWINGS

FIG. 1 is a diagram of an example of a structure of an electronic device according to an embodiment of this application;
FIG. 2 is a diagram of an example of a structure of a power management chip according to an embodiment of this application;
FIG. 3 is a diagram of an example of a structure of a current control circuit according to an embodiment of this application;
FIG. 4 is a diagram of an example of a structure of a current control circuit according to an embodiment of this application;
FIG. 5 is a diagram of another example of an architecture of a current control circuit according to an embodiment of this application;
FIG. 6 is a diagram of an example of a structure of a current control circuit according to an embodiment of this application;
FIG. 7A is a diagram of an example of a structure of a charge charging branch according to an embodiment of this application; and
FIG. 7B is a diagram of an example of a structure of a charge discharging branch according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms such as "second" and "first" below are only for ease of description, and cannot be understood as indicating or implying relative importance or implicitly indicating a quantity of indicated technical features. Therefore, a feature limited by "second", "first", or the like may explicitly or implicitly include one or more features. In the descriptions of this application, unless otherwise stated, "a plurality of" means two or more than two.

In addition, in embodiments of this application, orientation terms such as ''upper'', ''lower'', "left", and "right" may include but are not limited to definitions based on illustrated orientations in which components in the accompanying drawings are placed. It should be understood that, these directional terms may be relative concepts. They are used for description and clarification of relative positions, and may vary accordingly depending on a change in the orientations in which the components in the accompanying drawings are placed in the accompanying drawings.

In embodiments of this application, unless otherwise clearly specified and limited, the term "connection" should be understood in a broad sense. For example, the "connection" may indicate a fixed connection, a detachable connection, or an integral connection; or may indicate direct interconnection, or indirect interconnection through an intermediate medium. In addition, the term "coupling" may be a direct electrical connection, or may be an indirect electrical connection through an intermediate medium. The term "contact" may be direct contact or indirect contact through an intermediate medium.

In embodiments of this application, the term "and/or" describes an association relationship between associated objects and may indicate that three relationships exist. For example, A and/or B may indicate the following cases: Only A exists, both A and B exist, and only B exists, where A and B may be singular or plural. The character "/" generally indicates an "or" relationship between the associated objects.

First, some basic concepts in embodiments of this application are explained and described.

Current mode control in switching power supplies: Most switching power supplies use closed-loop feedback circuits to provide stable power supplies under various transient states and load conditions. Feedback method options are divided into two categories: voltage mode control (VMC) and current mode control (CMC). The two methods have their own advantages and disadvantages. Voltage control: The voltage mode control uses an adjusted output voltage value as a feedback signal. The method may provide a simple and direct feedback architecture for a control path. The method has several disadvantages. The biggest disadvantage is that output voltage adjustment needs to sense a change of an output voltage and propagate through an entire feedback signal and filter, and then an output can be compensated accordingly. For systems that require a high level of modulation, this may result in an unacceptable slow response. Feedback compensation of a power supply needs to be analyzed at a higher level to deal with two poles caused by an output low-pass filter. In addition, a feedback compensation value need be adjusted because different input voltages affect an overall loop gain.

Current control: Current mode control may resolve the foregoing disadvantages of the voltage mode control through an inductor current waveform for control. This signal is contained in an output voltage feedback loop as an auxiliary fast response control loop.

Peak current control: Peak current mode control (PCMC) directly uses a current waveform as a ramp waveform in a PWM generation comparator, instead of using an externally generated sawtooth (or triangular) signal as in the VMC. A rising ramp portion of an inductor current or highside transistor current waveform is used to provide a fast response control loop outside of an existing voltage control loop. A current signal is compared with an output of a voltage error amplifier, to generate a PWM control signal of the power supply. The switching power supply can implement high efficiency between input and output power rails. To maintain high efficiency of a converter, detection resistance for measuring an inductor current should ideally be as small as possible to reduce a power loss caused by the measurement. A small value resistor may result in a small amplitude feedback signal.

The current control solution provided in embodiments of this application is applicable to a plurality of application scenarios and system devices. For example, the current control solution is applied to an electronic device. The electronic device may be a consumer electronic product, a home electronic product, a vehicle-mounted electronic product, a financial terminal product, or a communication electronic product. The consumer electronic product is, for example, a mobile phone (mobile phone), a tablet computer (pad), a notebook computer, an e-reader, a personal computer (personal computer, PC), a personal digital assistant (personal digital assistant, PDA), a desktop display, an intelligent wearable product (for example, a smart watch or a smart band), a virtual reality (virtual reality, VR) terminal device, an augmented reality (augmented reality, AR) terminal device, an uncrewed aerial vehicle, or a vehicle. The home electronic product is, for example, a smart door lock, a television, a remote control, a refrigerator, a small household charging appliance (for example, a soy milk maker or a robot vacuum), or the like. The vehicle-mounted electronic product is, for example, a vehicle-mounted navigator or a vehicle-mounted high-density digital video disc (digital video disc, DVD). The financial terminal product is, for example, an automated teller machine (automated teller machine, ATM) or a terminal for self-help service handling. The communication electronic product is, for example, a communication device like a server, a memory, a radar, or a base station.

The foregoing electronic products all relate to a power supply requirement.

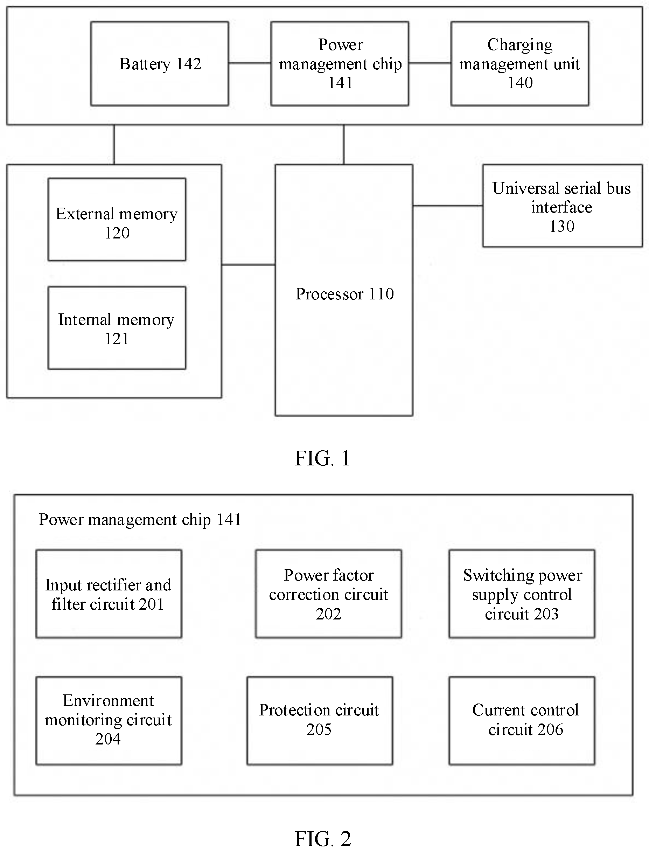

FIG. 1 is a diagram of an example of a structure of an electronic device according to an embodiment of this application. As shown in FIG. 1, the electronic device 100 may include a processor 110, an external memory 120, an internal memory 121, a universal serial bus (universal serial bus, USB) interface 130, a charging management unit 140, a power management chip 141, and a battery 142.

It may be understood that the structure shown in embodiments of this application does not constitute a specific limitation on the electronic device 400. In some other embodiments of this application, the electronic device 400 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on an instruction operation code and a time sequence signal, to complete control of instruction reading and instruction execution.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

An interface 420 for external memory may be configured to connect to an external memory card, for example, a micro SD card, to extend a storage capability of the electronic device 400.

The internal memory 121 may be configured to store computer-executable program code. The executable program code includes instructions.

The following further describes the power management chip 141 provided in this embodiment of this application. The power management chip 141 is configured to connect to the battery 142, the charging management unit 140, and the processor 110. The power management chip 141 receives input from the battery 142 and/or the charging management unit 140, and supplies power to system components such as the processor 110 and the internal memory 121.

For example, an embodiment of this application provides a power management chip 141. A diagram of an internal structure of the power management chip 141 is shown in FIG. 2. The power management chip 141 includes an input rectifier and filter circuit 201, a power factor correction circuit 202, a switching power supply control circuit 203, an environment monitoring circuit 204, a protection circuit 205, and a current control circuit 206.

The input rectifier and filter circuit 201 further includes a rectifier circuit and a filter circuit. The power management chip 141 first rectifies an input alternating current power supply through a rectifier circuit, to convert an alternating current into a pulsating direct current. Then, most pulsating components are removed through the filter circuit, to obtain a stable direct current voltage.

Power factor correction circuit 202: Some high-power switching power supplies may include the power factor correction circuit. The power factor correction circuit 203 controls a turn-on time of a switch element, to reduce impact of the power supply on a power grid, increase a power factor, and reduce harmonic pollution of the power grid.

Switching power supply control circuit 203: A switch element (usually a MOSFET) and a control circuit are integrated inside the power management chip 141, and are configured to implement a high-frequency switch operation of a power supply. The control circuit usually includes PWM (pulse width modulation) control logic, and is configured to adjust a switching time and a frequency of the switching element, to implement power supply conversion and output adjustment. Environment monitoring circuit 204: Some advanced switching power supply chips may integrate environment monitoring functions, such as voltage monitoring, current monitoring, and temperature monitoring, to monitor a power supply and a system status in real time.

Protection circuit 205: A chip usually integrates a plurality of protection circuits, such as overvoltage protection, overcurrent protection, short-circuit protection, and overtemperature protection, to ensure secure running of the power supply and connected devices.

A specific design of the current control circuit 206 is related to whether a voltage of each node and an output voltage can be quickly restored to a steady state when the power management chip 141 faces a sudden change of a load current, and further affects whether an entire circuit system is stable. However, because the power management chip 141 usually includes modules such as a feedback loop, an operational amplifier, and a resistor-capacitor network, a control voltage signal of each key node in the circuit is delayed in a transmission process. Consequently, a response time of an output voltage and a time for restoring to a steady state are prolonged.

Therefore, how to design a circuit structure of the current control circuit 201, so that a dynamic response of a system can be improved, and an output voltage and a voltage of each key node can be quickly restored to a steady-state value has become a subject of extensive research in the industry.

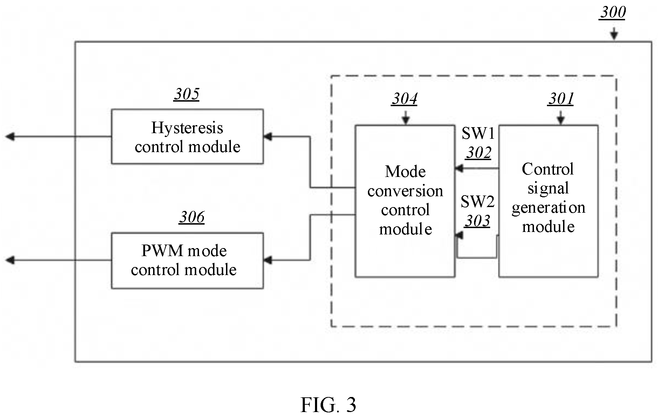

In view of this, in some embodiments, a structure of the current control circuit 206 is shown in FIG. 3. Two control modes: a PWM mode control module and hysteresis control are separately introduced into the circuit. When the system of the circuit is in a steady state, the PWM control mode module operates. When a load current in the circuit system changes abruptly, and an undershoot or an overshoot phenomenon occurs in the output voltage, the circuit system is switched from the PWM control mode to the hysteresis mode for control. The PWM control mode module stops operating, and the hysteresis mode control module operates, so that a response speed of the system is improved.

However, when the circuit system is switched from the PWM control mode to the hysteresis mode, there are problems of frequency variation and instability. If a frequency of an automobile power supply chip is unstable and uncontrolled, it is easy to interfere with most frequency bands of 150 kHz to 108 MHz occupied by amplitude modulation broadcasting, frequency modulation broadcasting, and mobile services.

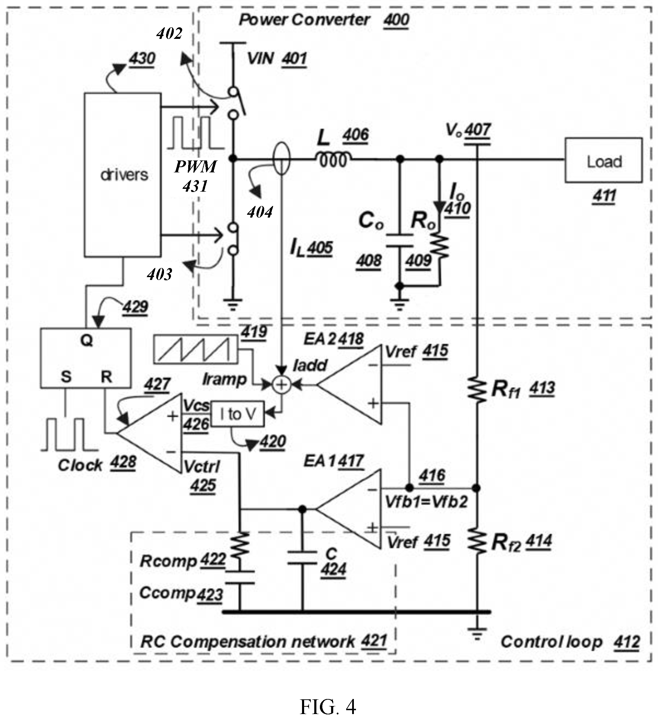

In view of this, in some other embodiments, a structure of the current control circuit 206 is shown in FIG. 4. In comparison with a conventional peak current control circuit, an error amplifier 415 is added to the structure of the circuit. An error amplifier 418 provides a fast feedback loop, which is not affected by a delay caused by a resistor-capacitor network circuit, and can quickly feed back an output voltage to a control loop, thereby improving a response speed of the system.

However, a design of the fast feedback loop in this solution is complex, and control logic is also complex.

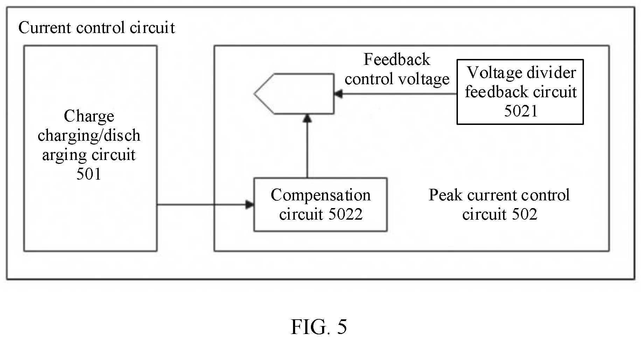

In view of this, an embodiment of this application provides a new design solution of the current control circuit 201, as shown in FIG. 5. An output voltage of the current control circuit 201 can quickly respond to a change of a load circuit. When a load current changes abruptly, although the output voltage of the current control circuit 201 is also affected by the load current, and a transient response like an overshoot or an undershoot occurs, in the solution in this embodiment of this application, the output voltage can be quickly restored to a steady-state value.

In addition, a switching frequency in the solution is constant.

The current control circuit 201 mainly includes a charge charging/discharging circuit 501 and a peak current control circuit 502.

The peak current control circuit 502 further includes a drive trigger circuit 5023, a mode switching circuit 5024, a voltage divider feedback circuit 5021, and a compensation circuit 5022.

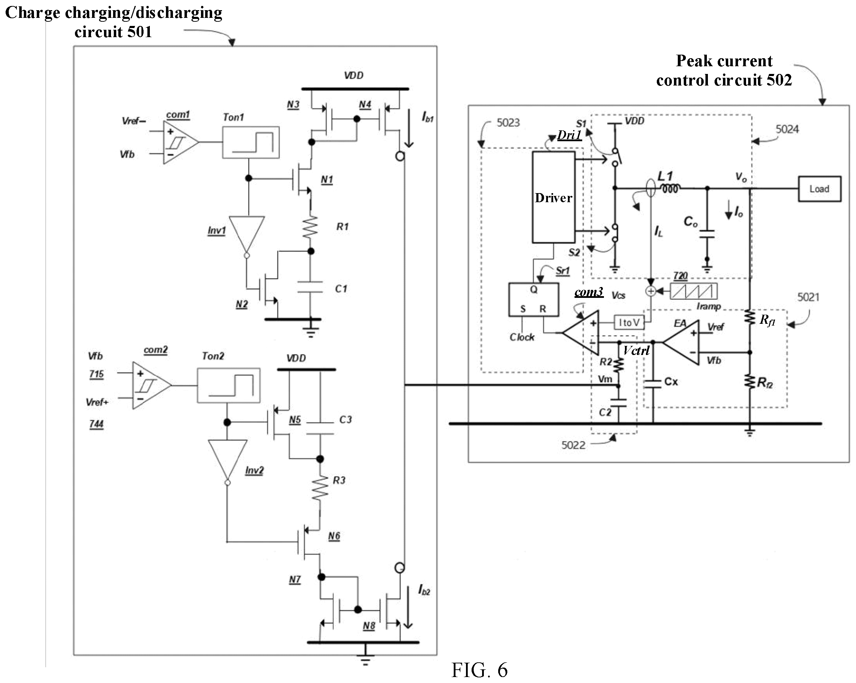

The drive trigger circuit 5023 is configured to generate a drive control signal. An input end of the drive trigger circuit 5023 is coupled to an output end of the voltage divider feedback circuit 5021, to receive a feedback control voltage signal Vctrl. In some embodiments, as shown in FIG. 6, the drive trigger circuit 5023 includes a trigger comparator com3, a driver dri1, and an SR trigger Sr1. An R input end of the SR trigger Sr1 is configured to receive an output signal that triggers the comparator com3, and an S input end of the SR trigger Sr1 is configured to receive a clock cycle signal. An output signal of an output end of the SR trigger Sr1 is transmitted to the driver dri1, and the driver dri1 generates two pulse width modulation signals whose phases are opposite at any moment. The two pulse width modulation signals are respectively used to control on/off of a charging switching transistor S1 and a discharging switching transistor S2 in the mode switching circuit 5024.

The mode switching circuit 5024 is coupled to both an output end of a power supply voltage end and an output end of the drive trigger circuit 5023, and receives the drive control signal of the drive trigger circuit 5023. Under an action of the drive control signal, the mode switching circuit 5024 enters different circuit operating states to generate different output voltages. An output end of the mode switching circuit is separately coupled to the load circuit and the voltage divider feedback circuit, to provide an output voltage signal for the load circuit and the voltage divider feedback circuit.

The voltage divider feedback circuit 5021 is configured to generate the feedback control voltage Vctrl. The output end of the voltage divider feedback circuit 5021 is coupled to an input end of the compensation circuit 5022.

The charge charging/discharging circuit 501 is also coupled to the input end of the compensation circuit 5022, and regulates the feedback control voltage Vctrl through the compensation circuit 5022.

When the feedback control voltage Vctrl decreases, the charge charging/discharging circuit 501 charges the compensation circuit 5022, so that the feedback control voltage Vctrl increases. When the feedback control voltage Vctrl increases, the compensation circuit 5022 is discharged through the charge charging/discharging circuit 501, so that the feedback control voltage Vctrl decreases. In some embodiments, as shown in FIG. 6, the mode switching circuit 5024 includes the charging switching transistor S1, the discharging switching transistor S2, a first inductor L1, and a load capacitor C0.

The charging switching transistor S1 and the discharging switching transistor S2 are coupled in series between the supply voltage terminal VDD and a reference ground voltage terminal. One end of the charging switching transistor S1 is coupled to the supply voltage terminal VDD, the other end of the charging switching transistor S1 is coupled to the discharging switching transistor S2, and the other end of the discharging switching transistor S2 is coupled to the reference ground voltage end. One end of the first inductor L1 is coupled to an intermediate node between the charging switch transistor S1 and the discharging switch transistor S2. The other end of the first inductor L1 is coupled to the output end of the mode switching circuit 5024, one end of the load capacitor C0 is also coupled to the output end of the mode switching circuit 5024, and the other end of the load capacitor C0 is coupled to the reference ground voltage end.

When the drive control signal of the drive trigger circuit 5023 drives the charging switching transistor S1 to be on and the discharging switching transistor S2 to be off, the first inductor L1 receives charging of the power supply voltage end VDD through the charging switching transistor S1, and the mode switching circuit 5024 enters a charging mode state. In this case, a current passing through the first inductor L1 is IL.

The output end of the mode switching circuit 5024 is separately coupled to the load circuit Load and the voltage divider feedback circuit 5021. Therefore, when the mode switching circuit 5024 enters the charging mode state, the output end Vo of the mode switching circuit 5024 provides the output voltage signal for the load circuit Load and the voltage divider feedback circuit 5021.

When the drive control signal of the drive trigger circuit 5023 drives the charging switching transistor S1 to be off and the discharging switching transistor S2 to be on, the first inductor L1 is discharged through the discharging switching transistor S2, and the mode switching circuit 5024 enters a state of a discharging mode. In this case, a voltage at the output end Vo of the mode switching circuit 5024 gradually decreases.

In some embodiments, as shown in FIG. 6, the voltage divider feedback circuit 5021 includes a first feedback resistor Rf1, a second feedback resistor Rf2, and a feedback loop comparator EA.

The first feedback resistor Rf1 and the second feedback resistor Rf2 are coupled in series between the output end Vo of the mode switching circuit 5024 and the reference ground voltage end. One end of the first feedback resistor Rf1 is coupled to the output end Vo of the mode switching circuit 5024, the other end of the first feedback resistor Rf1 is coupled to the second feedback resistor Rf2, and the other end of the second feedback resistor Rf2 is coupled to the reference ground voltage end. Under a voltage division effect of the first feedback resistor Rf1 and the second feedback resistor Rf2, a voltage at an intermediate node between the first feedback resistor Rf1 and the second feedback resistor Rf2 is Vo*Rf2/ (Rf1+Rf2), and the voltage at the intermediate node is denoted as a feedback loop voltage Vfb.

A first input end of the feedback loop comparator EA is coupled to the intermediate node between the first feedback resistor Rf1 and the second feedback resistor Rf2, and receives a signal of the feedback loop voltage Vfb. A second input end of the feedback loop comparator EA receives a signal of a feedback reference voltage Vref.

The output end of the voltage divider feedback circuit 5021 is an output end of the feedback loop comparator EA. The output end of the feedback loop comparator EA is coupled to the compensation circuit 5022.

In some embodiments, as shown in FIG. 6, the compensation circuit 5022 includes a first compensation resistor R2, a first compensation capacitor C2, and a second compensation capacitor Cx. The first compensation resistor R2 and the first compensation capacitor C2 are coupled in series between the output end of the feedback loop comparator EA and the reference ground voltage end. One end of the first compensation resistor R2 is coupled to the output end of the feedback loop comparator EA, the other end of the first compensation resistor R2 is coupled to the first compensation capacitor C2, and the other end of the first compensation capacitor C2 is coupled to the reference ground voltage end.

The second compensation capacitor Cx is coupled between the output end of the feedback loop comparator EA and the reference ground voltage end, and the second compensation capacitor Cx forms a parallel connection relationship with a series branch of the first compensation resistor R2 and the first compensation capacitor C2.

An intermediate node between the first compensation resistor R2 and the first compensation capacitor C2 is coupled to the charge charging/discharging circuit 501. The charge charging/discharging circuit 501 adjusts a voltage Vm at the intermediate node between the first compensation resistor R2 and the first compensation capacitor C2. A change of the voltage Vm at the intermediate node causes a change of the feedback control voltage Vctrl, and the charge charging/discharging circuit 501 regulates the feedback control voltage Vctrl.

In some embodiments, the charge charging/discharging circuit 501 includes a charge charging branch 5011 and a charge discharging branch 5012.

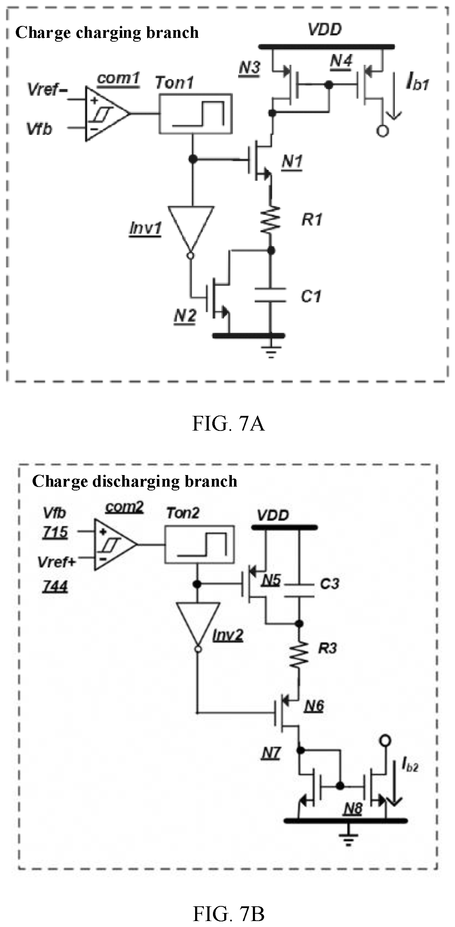

As shown in FIG. 7A, in some embodiments, the charge charging branch 5011 includes a first comparator com1, a first constant on timer Ton1, and a first transistor N1. A first input end (namely, a non-inverting input end) of the first comparator com1 receives a first reference voltage Vref-, and a second input end (namely, an inverting input end) receives the feedback loop voltage Vfb. A voltage value of the first reference voltage Vref- is slightly less than a voltage value of the feedback reference voltage Vref.

An output end of the first comparator com1 is coupled to an input end of the first constant on timer Ton1. An output signal of the first comparator com1 is transmitted to the input end of the first constant on timer Ton1.

An output end of the first constant on timer Ton1 is coupled to a control electrode of the first transistor N1. An output signal of the first constant on timer Ton1 is used to control on and off of the first transistor N1.

The charge charging branch 5011 further includes a first inverter Inv1 and a second transistor N2. The output end of the first constant on timer Ton1 is coupled to an input end of the first inverter Inv1, and an output end of the first inverter Inv1 is coupled to a control electrode of the second transistor N2. The output signal of the first constant on timer Ton1 is further used to control on and off of the second transistor N2.

When the output signal of the first constant on timer Ton1 is an active high level, the first transistor N1 is on. After the output signal of the first constant on timer Ton1 is processed by the first inverter Inv1, the output end of the first inverter Inv1 outputs an inactive low level, and the second transistor N2 coupled to the output end of the first inverter Inv1 is off.

Similarly, when the output signal of the first constant on timer Ton1 is an inactive low level, the first transistor N1 is off. After the output signal of the first constant on timer Ton1 is processed by the first inverter Inv1, the output end of the first inverter Inv1 outputs an active high level, and the second transistor N2 coupled to the output end of the first inverter Inv1 is on.

The charge charging branch 5011 further includes a first current mirror, where the first current mirror is coupled to the power supply voltage end to receive the power supply voltage signal, and a first output end of the first current mirror is coupled to a first electrode of the first transistor. A second output end of the first current mirror is coupled to the intermediate node between the first compensation resistor R2 and the first compensation capacitor C2 in the compensation circuit 5022. The charge charging branch 5011 further includes a first resistor R1 and a first capacitor C1. A second electrode of the first transistor N1 is coupled to a first end of the first resistor R1, a second end of the first resistor R1 is coupled to a first end of the first capacitor C1, and a second end of the first capacitor C1 is coupled to the reference ground voltage end.

An intermediate node between the first resistor R1 and the first capacitor C1 is coupled to a first electrode of the second transistor N2. A second electrode of the second transistor N2 is coupled to the reference ground voltage end.

Due to existence of the first inverter Inv1, an on/off state of the first transistor N1 is exactly opposite to an on/off state of the second transistor N2, and on/off of the first transistor N1 is used to control whether a branch in which the first resistor R1 and the first capacitor C1 are located is conducted.

When the output signal of the first constant on timer Ton1 is an active high level, the first transistor N1 is on, a branch in which the first transistor N1, the first current mirror, the first resistor R1, and the first capacitor C1 are all coupled in series is conducted, and the power supply voltage VDD of the power supply voltage end charges the first capacitor C1. In this case, the second transistor N2 is off, and therefore the first capacitor C1 is not short-circuited.

When the output signal of the first constant on timer Ton1 is an inactive low level, the first transistor N1 is off, and the branch in which the first transistor N1, the first current mirror, the first resistor R1, and the first capacitor C1 are coupled in series is disconnected. In this case, the second transistor N2 is on. Therefore, the first capacitor C1 is discharged through the second transistor N2.

As shown in FIG. 7B, in some embodiments, the charge discharging branch 5012 includes a second amplifier com2, a second constant on timer Ton2, a third transistor N5, and a fourth transistor N6. A first input end of the second amplifier com2 receives a second reference voltage Vref+, and a second input end receives a feedback loop voltage Vfb. An output end of the second amplifier com2 is coupled to an input end of the second constant on timer Ton2, an output end of the second constant on timer Ton2 is coupled to a control electrode of the third transistor N5, and an output signal of the second constant on timer Ton2 is used to control on and off of the third transistor N5. In some embodiments, the charge discharging branch 5012 further includes a second inverter Inv2. An input end of the second inverter Inv2 is coupled to the output end of the second constant on timer Ton2, and the input end of the second inverter Inv2 is coupled to the control electrode of the third transistor N5. An output end of the second inverter Inv2 is coupled to a control electrode of the fourth transistor N6, and the output signal of the second constant on timer Ton2 controls on and off of the fourth transistor N6 through the second inverter Inv2.

The second inverter Inv2 may reverse a phase of the input signal by 180 degrees, and a phase of a signal at the input end of the second inverter Inv2 is exactly opposite to a phase of a signal at the output end of the second inverter Inv2.

When the output signal of the second constant on timer Ton2 is an active high level, the third transistor N5 is on. After the output signal of the second constant on timer Ton2 is processed by the second inverter Inv2, the output end of the second inverter Inv2 outputs an inactive low level, and the fourth transistor N6 coupled to the output end of the second inverter Inv2 is off.

When the output signal of the second constant on timer Ton2 is an inactive low level, the third transistor N5 is off. After the output signal of the second constant on timer Ton2 is processed by the second inverter Inv2, the output end of the second inverter Inv2 outputs an active high level, and the fourth transistor N6 coupled to the output end of the second inverter Inv2 is on.

In some embodiments, the charge discharging branch 5012 further includes a second resistor R3 and a second capacitor C3. A first end of the second capacitor C3 is coupled to the power supply voltage end VDD, and a second end of the second capacitor C3 is coupled to a first end of the second resistor R3. A second end of the second resistor R3 is coupled to a first electrode of the fourth transistor N6, a second electrode of the fourth transistor N6 is coupled to a first end of a second current mirror, and a second end of the second current mirror is coupled to the reference ground voltage end.

The first electrode of the fourth transistor N6 is coupled to the power supply voltage end VDD, and the second electrode of the fourth transistor N6 is coupled to an intermediate node between the second resistor R3 and the second capacitor C3.

When the output signal of the second constant on timer Ton2 is an active high level, the third transistor N5 is on. Due to a phase inversion function of the second inverter Inv2, the control electrode of the fourth transistor N6 receives an inactive low level, the fourth transistor N6 is off, a branch in which the second resistor R3, the second capacitor C3, the fourth transistor N6, and the second current mirror are located is disconnected, a closed-loop branch formed by the power supply voltage end VDD, the third transistor N5, and the second capacitor C3 is conducted, and the power supply voltage of the power supply voltage end VDD charges the second capacitor C3. When the output signal of the second constant on timer Ton2 is an inactive low level, the third transistor N5 is off. Due to a phase inversion function of the second inverter Inv2, the control electrode of the fourth transistor N6 receives an active high level, the fourth transistor N6 is on, a branch in which the second resistor R3, the second capacitor C3, the fourth transistor N6, and the second current mirror are located is conducted, the closed-loop branch formed by the power supply voltage end VDD, the third transistor N5, and the second capacitor C3 is disconnected, and the second capacitor C3 is discharged through the fourth transistor N6.

It may be clearly understood by a person skilled in the art that, for the purpose of convenient and brief description, in the foregoing embodiments, the description of each embodiment has respective focuses. For a part that is not described in detail in an embodiment, refer to a corresponding process in the foregoing method embodiment. Details are not described herein again. In several embodiments provided in the present invention, it should be understood that the provided methods and circuits may be implemented in other ways. For example, division into a module is merely logical function division. During actual implementation, there may be another division manner. For example, a plurality of units or components may be combined or integrated into another system, or some features may be ignored or not performed.

A person of ordinary skill in the art may be aware that, in combination with examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed circuits, methods, and terminals may be implemented in other manners. For example, the foregoing device embodiment is merely an example. For example, division into the modules is merely logical function division and may be other division in actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate components may or may not be physically separate, and components displayed as modules may or may not be physical modules, may be located in one device, or may be distributed on a plurality of devices. Some or all the modules may be selected based on actual needs to achieve the objectives of the solutions of embodiments.

In addition, functional modules in embodiments of this application may be integrated into one device, or each of the modules may exist alone physically, or two or more modules are integrated into one device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A current control circuit, comprising a charge charging/discharging circuit and a peak current control circuit, wherein
the peak current control circuit comprises a voltage divider feedback circuit and a compensation circuit, wherein the voltage divider feedback circuit is configured to generate a feedback control voltage;
the charge charging/discharging circuit is coupled to the compensation circuit, and regulates the feedback control voltage through the compensation circuit; and
when the feedback control voltage decreases, the charge charging/discharging circuit injects charges into the compensation circuit, so that the feedback control voltage increases; and when the feedback control voltage increases, the charge charging/discharging circuit draws charges from the compensation circuit, so that the feedback control voltage decreases.

2. The current control circuit according to claim 1, wherein the charge charging/discharging circuit comprises a charge charging branch and a charge discharging branch, the charge charging branch comprises a first current mirror, the charge discharging branch comprises a second current mirror, the first current mirror is coupled to the second current mirror, and an intermediate node between the first current mirror and the second current mirror is coupled to the compensation circuit.

3. The current control circuit according to claim 2, wherein the charge charging branch further comprises a first comparator, a first constant on timer, and a first transistor; and
a first input end of the first comparator receives a first reference voltage, and a second input end receives a feedback loop voltage; an output end of the first comparator is coupled to an input end of the first constant on timer, and an output end of the first constant on timer is coupled to a control electrode of the first transistor; and an output signal of the first constant on timer is used to control on and off of the first transistor.

4. The current control circuit according to claim 3, wherein the charge charging branch further comprises a first resistor and a first capacitor;
the first current mirror is coupled to a power supply voltage end to receive the power supply voltage signal, and a first output end of the first current mirror is coupled to a first electrode of the first transistor; and
a second electrode of the first transistor is coupled to a first end of the first resistor, a second end of the first resistor is coupled to a first end of the first capacitor, and a second end of the first capacitor is coupled to a reference ground voltage end.

5. The current control circuit according to claim 4, wherein the charge charging branch further comprises a first inverter and a second transistor; and
the output end of the first constant on timer is coupled to an input end of the first inverter, an output end of the first inverter is coupled to a control electrode of the second transistor, and the output signal of the first constant on timer controls on and off of the second transistor through the first inverter.

6. The current control circuit according to claim 5, wherein a first electrode of the second transistor is coupled to an intermediate node between the first resistor and the first capacitor, and a second electrode of the second transistor is coupled to the reference ground voltage end;
under control of the output signal of the first constant on timer, when the first transistor is on, the second transistor is off, and the first capacitor is charged by a power supply voltage of the power supply voltage end; and
under control of the output signal of the first constant on timer, when the first transistor is off, the second transistor is on, and the first capacitor and the second transistor form a discharge loop.

7. The current control circuit according to any one of claims 2 to 6, wherein the charge discharging branch comprises a second amplifier, a second constant on timer, and a third transistor; and
a first input end of the second amplifier receives a second reference voltage, and a second input end receives the feedback loop voltage; an output end of the second amplifier is coupled to an input end of the second constant on timer, and an output end of the second constant on timer is coupled to a control electrode of the third transistor; and an output signal of the second constant on timer is used to control on and off of the third transistor.

8. The current control circuit according to any one of claims 2 to 6, wherein the charge discharging branch further comprises a second inverter;
an input end of the second inverter is coupled to an output end of the second constant on timer, and the input end of the second inverter is coupled to a control electrode of the third transistor; and
after an output signal of the output end of the second constant on timer is processed by the second inverter, a phase is reversed by 180 degrees.

9. The current control circuit according to any one of claims 2 to 8, wherein the charge discharging branch further comprises a second resistor and a second capacitor; and
a first end of the second capacitor is coupled to the power supply voltage end, a second end of the second capacitor is coupled to a first end of the second resistor, a second end of the second resistor is coupled to a first electrode of the third transistor, a second electrode of the third transistor is coupled to a first end of the second current mirror, and a second end of the second current mirror is coupled to the reference ground voltage end.

10. The current control circuit according to any one of claims 2 to 9, wherein the charge discharging branch further comprises a fourth transistor;
an output end of the second inverter is coupled to a control electrode of the fourth transistor, and the output signal of the second constant on timer controls on and off of the fourth transistor through the second inverter; and
a first electrode of the fourth transistor is coupled to the power supply voltage end, and a second electrode of the fourth transistor is coupled to an intermediate node between the second resistor and the second capacitor.

11. The current control circuit according to any one of claims 2 to 10, wherein under control of the output signal of the second constant conduction timer, when the third transistor is on, the fourth transistor is off, and the second capacitor is charged by the power supply voltage of the power supply voltage end; and
under control of the output signal of the second constant on timer, when the third transistor is off, the fourth transistor is on, and the second capacitor is discharged.

12. The current control circuit according to any one of claims 2 to 11, wherein the compensation circuit comprises a first compensation resistor, a first compensation capacitor, and a second compensation capacitor;
the first compensation resistor and the first compensation capacitor are coupled in series between an output end of the voltage divider feedback circuit and the reference ground voltage end, and the second compensation capacitor is coupled between the output end of the voltage divider feedback circuit and the reference ground voltage end; and
the second compensation capacitor is connected in parallel to a series branch of the first compensation resistor and the first compensation capacitor.

13. The current control circuit according to any one of claims 2 to 12, wherein the peak current control circuit further comprises a drive trigger circuit;
the drive trigger circuit is configured to generate the drive control signal; and
an input end of the drive trigger circuit is coupled to the output end of the voltage divider feedback circuit, and receives the feedback control voltage of the voltage divider feedback circuit.

14. The current control circuit according to claim 13, wherein the peak current control circuit further comprises a mode switching circuit; and
the mode switching circuit is coupled to both an output end of the power supply voltage end and an output end of the drive trigger circuit, and receives the drive control signal of the drive trigger circuit; and under an action of the drive control signal, the mode switching circuit enters different circuit operating states to generate different output voltages.

15. The current control circuit according to claim 14, wherein an output end of the mode switching circuit is separately coupled to the load circuit and the voltage divider feedback circuit, to provide an output voltage signal for the load circuit and the voltage divider feedback circuit.

16. A power supply chip, comprising the current control circuit according to any one of claims 1 to 15 and a power supply detection module, wherein the current control circuit is coupled to the power supply detection module.

17. An electronic device, comprising the power supply chip according to claim 16 and a printed circuit board, wherein the power supply chip is disposed on the printed circuit board.
